# EUROPÄISCHE PATENTANMELDUNG

(11) **EP 0 570 063 A1**
(43) Veröffentlichungstag der Anmeldung: **18.11.1993**
(21) Anmeldenummer: 93201322.0
(22) Anmeldetag: 07.05.1993
(51) Int. Cl.: C09K 11/64

(54) **Grün lumineszierendes Zinksulfid**

(30) Priorität: 15.05.1992 DE 4216104
(71) Anmelder: Philips Patentverwaltung GmbH, 22335 Hamburg (DE); Philips Electronics N.V., 5621 BA Eindhoven (NL)
(72) Erfinder: Bredol, Michael, Dr., W-2000 Hamburg 1 (DE); Kynast, Ulrich, Dr., W-2000 Hamburg 1 (DE); Merikhi, Jaqueline, W-2000 Hamburg 1 (DE); Ronda, Cornelis, Dr., W-2000 Hamburg 1 (DE)
(74) Vertreter: Rooda, Hans

(57) **Zusammenfassung**

Die Erfindung betrifft ein lumineszierendes Zinksulfid mit kubischer Struktur (Zinkblende), welches mit Aluminium und Kupfer derart aktiviert ist, daß sich ein grün emittierender Leuchtstoff ergibt. Bei einfacher Herstellungsmöglichkeit werden hohe x-Werte der Chromatizität und hohe Lichtausbeute dadurch erreicht, daß Kupfer in einer Menge von 200 bis 450 mol-ppm und Aluminium in einer Menge von 700 bis 2000 mol-ppm eingebracht ist.

## Beschreibung

Die Erfindung bezieht sich auf ein lumineszierendes Zinksulfid mit kubischer Struktur (Zinkblende), welches mit Aluminium und Kupfer derart aktiviert ist, daß sich ein grün emittierender Leuchtstoff ergibt.

Derartige durch die DE-B-23 63 744 bekannte Leuchtstoffe werden insbesondere für Farbbildröhren verwendet. Kubisches ZnS:Cu,Al (Zinkblende, Sphalerit) ermöglicht eine höhere Lichtausbeute sowie eine langwelligere Emission als hexagonales Wurtzit. Zinkblende wird ab 1020° C in Wurtzit umgewandelt. Um das zu verhindern, dürfen eingangs genannte Leuchtstoffe bei der Herstellung nicht über ca. 1000° C erhitzt werden.

Derartige Leuchtstoffe sollen bei gegebener Intensität der Elektronenbestrahlung eine hohe Leuchtkraft haben. Ferner sind x-Werte der Chromatizität von mindestens 0,29 anzustreben, damit die Leuchtstoffe nach dem Aufbringen auf einen Bildschirm und der dabei unvermeidbaren Verringerung des x-Wertes noch ausreichende x-Werte aufweisen (entsprechend EBU-Norm etwa 0,28).

Wenn als Dotierstoff ausschließlich Cu und Al verwendet werden, weil man giftiges Cd oder fertigungstechnisch problematisches Au vermeiden will, hat man bisher nur relativ kleine Mengenanteile von Cu und Al einbringen können, wenn eine noch ausreichende Helligkeit garantiert werden sollte. Dann waren aber zwangsläufig nur relativ kleine x-Werte an der unteren Grenze des zulässigen Bereichs möglich.

Der Erfindung liegt die Aufgabe zugrunde, einen Leuchtstoff der eingangs genannten Art derart zu gestalten, daß er bei einfacher Herstellungsmöglichkeit sowohl hohe x-Werte der Chromatizität als auch eine hohe Lichtausbeute ermöglicht.

Die Lösung gelingt dadurch, daß Kupfer in einer Menge von 200 bis 450 mol-ppm und Aluminium in einer Menge von 700 bis 2000 mol-ppm eingebracht ist.

Mit erfindungsgemäßen Leuchtstoffen werden x/y-Koordinaten der Chromatizität erreicht, welche innerhalb des durch die Koordinatenpunkte
[0,320/0,605],[0,286/0,610],[0,280/0,542] und [0,280/0,610] aufgespannten Vierecks gemäß EBU-Norm liegen.

Zu beachten ist, daß die Lichtausbeute mit zunehmender Dotierkonzentration abnimmt, wobei jedoch innerhalb des erfindungsgemäß definierten Bereichs besonders hohe Helligkeitswerte erreicht werden. Es hat sich gezeigt, daß die Helligkeitswerte in diesem Bereich durch eine abschließende Temperbehandlung bei 450° C in Luft (500° C sollten nicht überschritten werden) um etwa 10% erhöht werden. Eine solche Temperbehandlung braucht nicht unbedingt als zusätzlicher Verfahrensschritt durchgeführt zu werden, da im Verlaufe der Herstellung eines Bildschirms meist ohnehin genügend lange Zeit Temperaturen im Bereich von 450° C auf die Leuchtstoffschicht einwirken. Wenn Kupfer in einer Menge von 280 bis 420 mol-ppm und Aluminium in einer Menge von 850 bis 1200 mol-ppm eingebracht ist, werden ausreichend hohe Helligkeitswerte ohne außergewöhnlichen Fertigungsaufwand erreicht. Außerhalb dieses Bereichs sind bei der Herstellung der Leuchtstoffe Maßnahmen zur schnelleren Abkühlung des auf Temperaturen von weniger als 1000° C gebrachten Reaktionsgemisches der Ausgangsstoffe empfehlenswert. Bei entsprechender Sorgfalt sind dann extrem hohe Helligkeitswerte erreichbar, wobei allerdings die Reproduzierbarkeit und eine geringe Streubreite nur mit einem hohen Fertigungsaufwand gewährleistet werden können.
Es hat sich erwiesen, daß hohe x-Werte der Chromatizität und gleichzeitig hohe Helligkeitswerte dann erzielt werden, wenn das Verhältnis der mol-ppm-Mengen von Aluminium zu Kupfer 2 bis 5 beträgt.
Die Erfindung wird anhand der Beschreibung von Ausführungsbeispielen und anhand der Zeichnung näher erläutert.
- Fig. 1: zeigt für verschiedene Mengenanteile von Al die ermittelten x-Werte in Abhängigkeit des CuMengenanteils.
- Fig. 2: zeigt zugehörige Helligkeitswerte.
Eine Vielzahl von Leuchtstoffproben mit verschiedenen Anteilen von Al und Cu wurde untersucht. In der folgenden Tabelle sind für einige dieser Proben mit den laufenden Nummern 1 bis 21 und 1a, 5a, 11a, 16a und 20a die wichtigsten Daten aufgelistet. Die Proben 1 bzw. 1a enthalten Dotierungsmengen Cu und Al entsprechend dem Stand der Technik.
Die Mengenanteile für Cu und Al in mol-ppm geben an, wieviele Cu- bzw. Al-Atome in der Anzahl von 10⁶ Zn+Cu+Al-Atomen eingebracht ist.
Die Helligkeitswerte in lm/W und die Chromatizität wurden bei 12 kV und 5 nA gemessen. Mit x und y sind in üblicher Weise die Koordinaten der Chromatizität bezeichnet.
Die Proben 1,5,6,11 und 20 wurden bei 450° C nachgetempert. Dadurch ändern sich die Werte entsprechend den in der Tabelle gleichbezifferten und zusätzlich mit a bezeichneten Proben. Man erkennt, daß durch die Nachtemperung zwar einerseits die x-Werte geringfügig sinken, andererseits aber bedeutend höhere Helligkeitswerte erreicht wurden.

| Probe Nr. | ppm (Cu) | ppm (Al) | lm/W | x | y |
|---|---|---|---|---|---|
| 1 | 150 | 700 | 86 | 0.282 | 0.622 |
| 2 | 0 | 3100 | 18 | 0.151 | 0.178 |
| 3 | 110 | 3100 | 58 | 0.271 | 0.615 |
| 4 | 210 | 3100 | 63 | 0.281 | 0.613 |
| 5 | 430 | 3100 | 54 | 0.295 | 0.609 |
| 6 | 890 | 3100 | 40 | 0.309 | 0.601 |
| 7 | 0 | 7050 | 14 | 0.157 | 0.175 |
| 8 | 100 | 7050 | 64 | 0.252 | 0.601 |
| 9 | 220 | 7050 | 58 | 0.270 | 0.603 |
| 10 | 450 | 7050 | 50 | 0.282 | 0.606 |
| 11 | 780 | 7050 | 40 | 0.294 | 0.600 |
| 12 | 0 | 490 | 23 | 0.151 | 0.191 |
| 13 | 90 | 490 | 81 | 0.274 | 0.621 |
| 14 | 180 | 490 | 80 | 0.284 | 0.619 |
| 15 | 360 | 490 | 67 | 0.273 | 0.618 |
| 16 | 780 | 490 | 43 | 0.268 | 0.614 |
| 17 | 0 | 930 | 20 | 0.153 | 0.200 |
| 18 | 90 | 930 | 76 | 0.278 | 0.621 |
| 19 | 180 | 930 | 77 | 0.289 | 0.618 |
| 20 | 370 | 930 | 72 | 0.300 | 0.615 |
| 21 | 700 | 930 | 67 | 0.286 | 0.618 |
| 1a | 150 | 700 | 87 | 0.279 | 0.621 |
| 5a | 430 | 3100 | 61 | 0.287 | 0.514 |
| 6a | 890 | 3100 | 45 | 0.301 | 0.609 |
| 11a | 780 | 7050 | 45 | 0.284 | 0.607 |
| 20a | 370 | 930 | 77 | 0.291 | 0.617 |

Die Vergleichsproben 1 und 1a lassen erkennen, daß bei herkömmlicher Dotierungsmenge durch die Nachtemperung nahezu keine Erhöhung der Emissionshelligkeit erreicht wird.

Sämtliche in der Tabelle aufgeführten Proben wurden auf die gleiche Weise hergestellt. Zunächst wurde ZnS (Lumineszenzqualität) mit etwa 10 Gew.% Schwefel in destilliertem Wasser aufgeschlämmt. Die S-Menge ist jedoch unkritisch und sollte zwischen 1 und 10 Gew.% betragen. In diese Schlämme wurde eine Lösung von Aluminiumacetylacetonat (in einer der jeweiligen Probe zugeordneten Menge) mit wenig Methanol eingerührt, zur Trockene eingedampft und danach einige Stunden bei etwa 120° C im Trockenschrank getrocknet. Für eine Probe wurde etwa 10 g dieses Trockenmaterials in destilliertem Wasser aufgeschlämmt und mit der für die Probe gewünschten Menge einer Lösung von Kupfer (II) Acetylacetonat versetzt. Die Aufschlämmung wurde dann wiederum zur Trockene eingedampft und schließlich bei etwa 120° C im Trockenschrank getrocknet.

Das so vorbereitete Rohmaterial wurde in Quarzrohre gefüllt, mit einer großen Schicht Aktivkohle bedeckt und im Röhrenofen gebrannt. Zur Einstellung einer gleichmäßigen Glühatmosphäre wurde langsam (vorteilhaft innerhalb 60 min) aufgeheizt. Nach dem Erreichen der Glühtemperatur von etwa 980° C wurde diese etwa 120 min aufrechterhalten. Da das Abkühlen nicht zu langsam erfolgen darf, wurden die Röhren in Eiswasser abgeschreckt.

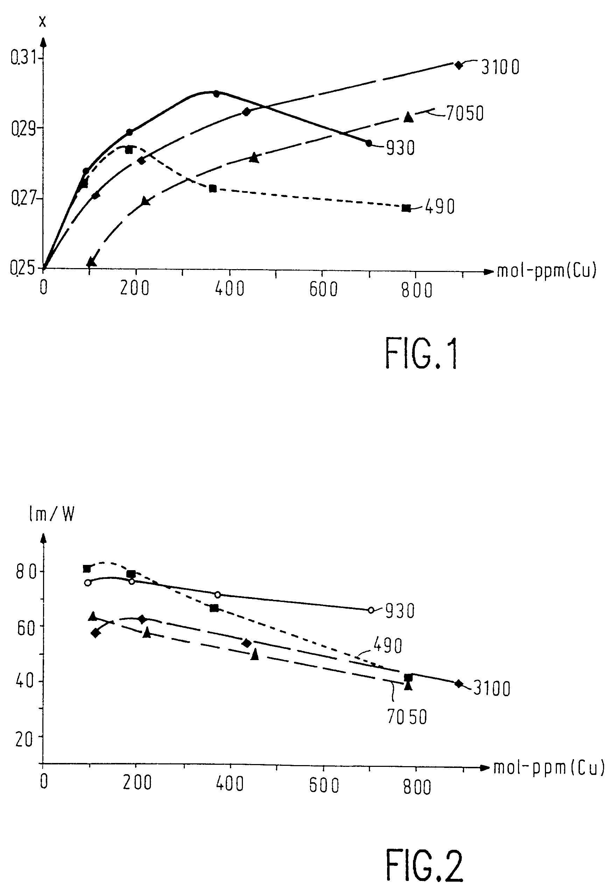

In Fig. 1 sind die x-Werte der Proben 2 bis 21 (Tabelle) über dem Cu-Mengenanteil aufgetragen. Dargestellt sind Kennlinien für die Al-Anteile 490, 930, 3100 und 7050 mol/ppm.

In Fig. 2 sind gegenüber Fig. 1 statt der x-Werte die zugehörigen Helligkeitswerte (lm/Wlm/W) eingetragen. Auch dort sind dem jeweiligen Al-Anteil zugeordnete Kennlinien dargestellt.
Die Kennlinien der Fig. 1 und Fig. 2 lassen erkennen, daß die x-Werte und gleichzeitig die Helligkeitswerte der erfindungsgemäßen Leuchtstoffe hohe Werte annehmen. Hinzu kommt, daß die Helligkeitswerte erfindungsgemäßer Leuchtstoffe gegenüber den in Fig. 2 dargestellten Werten durch Nachtempern um etwa 10% vergrößert werden können.

Die in Fig. 2 dargestellten Helligkeitswerte wurden erreicht, ohne daß Maßnahmen zur extrem schnellen Abkühlung von der Glühtemperatur (980°C) vorgesehen werden mußten. Die bei der Herstellung der in der Tabelle aufgeführten Proben vorgesehenen Abkühlzeiten lassen sich ohne erheblichen Fertigungsaufwand auch bei einer Serienfertigung problemlos realisieren, ohne daß die Leuchtstoffdaten unzulässig streuen.

Durch extrem schnelle (aber schlechter reproduzierbare) Abkühlung konnten sogar bei weniger Dotierstoffe enthaltenden Proben gute x-Werte und hohe Helligkeitswerte erreicht werden. Beispielsweise wurde bei einer Probe mit 50 mol-ppm Cu und 500 mol-ppm Al x=0,30, y=0,62 und 80 lm/W erzielt.

## Patentansprüche

1. Lumineszierendes Zinksulfid mit kubischer Struktur (Zinkblende), welches mit Aluminium und Kupfer derart aktiviert ist, daß sich ein grün emittierender Leuchtstoff ergibt,
dadurch gekennzeichnet, daß Kupfer in einer Menge von 200 bis 450 mol-ppm und Aluminium in einer Menge von 700 bis 2000 mol-ppm eingebracht ist.

2. Zinksulfid nach Anspruch 1,
dadurch gekennzeichnet, daß Kupfer in einer Menge von 280 bis 420 mol-ppm und Aluminium in einer Menge von 850 bis 1200 mol-ppm eingebracht ist.

3. Zinksulfid nach Anspruch 1 oder Anspruch 2,
dadurch gekennzeichnet, daß das Verhältnis der mol-ppmMengen von Aluminium zu Kupfer 2 bis 5 beträgt.

4. Verfahren zur Herstellung von lumineszierendem Zinksulfid nach einem der Ansprüche 1 bis 3,
dadurch gekennzeichnet, daß eine abschließende Temperung bei einer Temperatur von 300 bis 550°C, insbesondere bei etwa 450°C durchgeführt wird.
